# EUROPEAN PATENT SPECIFICATION

(11) **EP 1 782 221 B1**
(45) Date of publication and mention of the grant of the patent: **28.01.2009**
(21) Application number: 05752531.3
(22) Date of filing: 14.06.2005
(51) Int. Cl.: G06F 13/38, G06F 11/00

(54) **STATUS INDICATOR**
STATUSINDIKATOR
INDICATEUR DE STATUT

(30) Priority: 15.06.2004 SE 0401530
(43) Date of publication of application: 09.05.2007
(73) Proprietor: HMS Industrial Networks AB, 302 45 Halmstad (SE)
(72) Inventor: PALMHAGER, Jörgen, S-302 40 Halmstad (SE); ÖSTLUND, Jan, S-302 47 Halmstad (SE); ARVIDSSON, Anders, S-302 51 Halmstad (SE)
(74) Representative: Johansson, Magnus
(86) International application number: PCT/SE2005/000904
(87) International publication number: WO 2005/124568

(56) References cited:
- US-A1- 2002 078 173
- US-A1- 2003 135 533

## Description

### Technical field

The present invention generally relates to data communication, and more specifically to a method for determining the validity of data received from a communications module.

### Technical background

Field bus systems are frequently used in the industry for enabling communication between different units in control systems. Various types of field buses have been developed by different companies and organizations all over the world. The term field bus covers many different industrial network protocols. Generally, industrial field buses may be sub-divided into different categories depending on the capabilities they offer. The simplest field bus protocols are designed primarily for an on/off interface used for e.g. valves, proximity sensors, and limit switches, while more complex field bus protocols offer handling of large amounts of data as when a computer communicates with a PLC (Programmable Logic Controller). Examples of field buses of different complexity used today are CONTROLNET, PROFIBUS, DEVICENET, CANBUS, and LONWORKS.

When connecting e.g. a PLC to a specific field bus, the manufacturer of the PLC must provide an interface to the field bus in order to enable reception and transmission of data via the field bus network. Since the number of available field bus protocols is extensive, and most of the protocols are not compatible, neither from a physical nor a communicative point of view, it is expensive and cumbersome to provide e.g. PLCs for each and every possible field bus system.

One solution to the problem above is to provide a communications module, which acts as an interfaces between the PLC and the field bus network. The interface between the communications module and the PLC may hence be fixed and standardized while the interface towards the field bus network may vary from module to module.

However, devices, such as a PLC, which are to be connected to the field bus network via the communications module must in many cases be able to determine if the data received from the network via the communications module is in fact correct. For example, a PLC which is controlling a pump used in the cooling system of a nuclear power plant must for matter of security be able to determine if data received from the central control system is valid or not. More specifically, if the PLC receives erroneous values and is able to determine that the values are indeed erroneous, it may switch over to a predetermined emergency state wherein it e.g. controls the pump so that a maximum flow of cooling liquid is established.

Different approaches for making it possible to detect e.g. a cable break have been proposed in the art. Specialized digital protocols or predetermined signal levels (for example the 4-20mA standard used for analogue control) are extensively used in the industry. A communications module as described above may easily check the data received via the network and alarm the device to which it is connected in case the data are erroneous. However in the technical field related to field buses, and particularly when a device, such as a PLC, is communicating with a control center by means of a field bus via a communications module acting as interface, problems arise since the device is in many cases unable to determine, based on the received data, if there are any problems with the data integrity.

US 2002/0078173 A1 discloses a data acquisition apparatus which acquires sensor data indicative of an operational state of an external operational unit and provides the sensor data to a remote host. To achieve this functionality, the data acquisition apparatus utilizes memory, a first data interface, a second data interface, and logic. The first data interface is configured to receive sensor data that is indicative of an operational state of an external operational unit, and the second data interface is configured to communicate with a remote host. The logic is configured to store the sensor data in the memory and, when requested, to communicate the sensor data to the remote host via the first data interface.

EP 0 877 322 A2 discloses a communication system wherein a collecting communication unit of a plurality of communication units collects state information from report communication units to manage the state information, each of the report communication units comprises a state information memory for storing the state information of own communication unit, a state monitoring portion for monitoring the state information of own communication unit and then rewriting the stored state information into new state information after change if the state information has been changed, and a transmitting/receiving portion for adding the stored state information and own address to the recovery command and then transmitting the recovery command when respective report communication units receive the recovery command for recovering the state information, whereby the collecting communication unit can receive the recovery command to which changed state information and their own addresses of respective report communication units are added collectively.

Consequently, there is a need for a robust and reliable method for making it possible for the device to determine if the data received from the communications module is correct.

### Summary of the invention

An object of the present invention is to overcome the above described problems of the known technologies in regards to determining the validity of the received data. A particular advantage of the present invention is the provision of data relating to the current state of a state machine controlling the operational states of the communications module. A further advantage of the invention is the possibility to continuously update the device as regards the current state of the state machine.

A particular feature of the present invention relates to the provision of a header which is added to other data that is sent to the device from the communications module, wherein the header comprises information relating to the current state of the state machine.

The above objects, advantages and features together with numerous other objects, advantages and features, which will become evident from the detailed description below, are obtained according to a first aspect of the present invention by a method for transferring operational data from a communications module during one or more predefined operational states controlled by a state machine in the communications module to an electric device connected to the communications module. The method comprises
determining which operational state the communications module is currently operating in,
adding information to the operational data, said information indicating the current operational state of the state machine, and
transferring a telegram, comprising the added information and the operational data, to the electric device.

The information may be part of a header that is added to the operational data.

The operational data may comprise process data for controlling the electric device.

The above objects, advantages and features together with numerous other objects, advantages and features, which will become evident from the detailed description below, are obtained according to a second aspect of the present invention by a method for interpreting operational data received in an electric device from a communications module during a first set of predetermined operational states of the communications module, said method comprising
receiving a telegram from the communications module,
extracting, from the telegram, operational data and information relating to the current operational state of the communications module,
determining, from the extracted information relating to the current operational state of the communications module, which of the predetermined operational states from the first set of states the communications module is currently operating in, and
discarding the received operational data as invalid if the determined operational state of the communications module is part of a second set of states comprising one or more predetermined operational states.

The information relating to the current operational state of the communications module may be part of a header that is added to the operational data.

The operational data may comprise process data for controlling the electric device.

### Brief description of the drawings

Further objects, features and advantages of the present invention will become apparent upon consideration of the following detailed description in conjunction with the appended drawings.

FIG. 1 is a schematic illustration of a network system, in which embodiments of the present invention may be applied.

FIG. 2 is a schematic diagram illustrating a state machine used for controlling the behavior of a communications module according to a preferred embodiment of the present invention.

FIG. 3 is a diagram illustrating the communication between the an electric device and a communications module according to a preferred embodiment of the present invention.

FIG. 4a illustrates a preferred structure of telegrams that are transferred between an electric device and a communications module according to a preferred embodiment of the present invention.

FIG. 4b illustrates a header of a telegram according to a preferred embodiment of the present invention.

### Detailed description of preferred embodiments

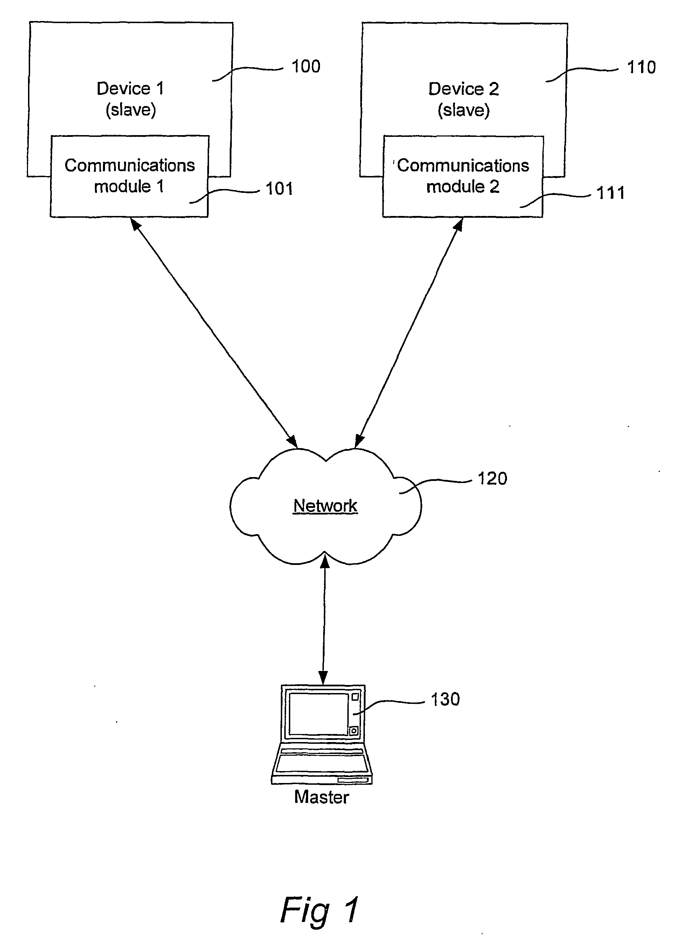

A communications module in which the present invention may be applied will first be described with reference to FIG 1. Then, the particulars of the communications module according to the invention will be described with reference to the remaining FIGs.

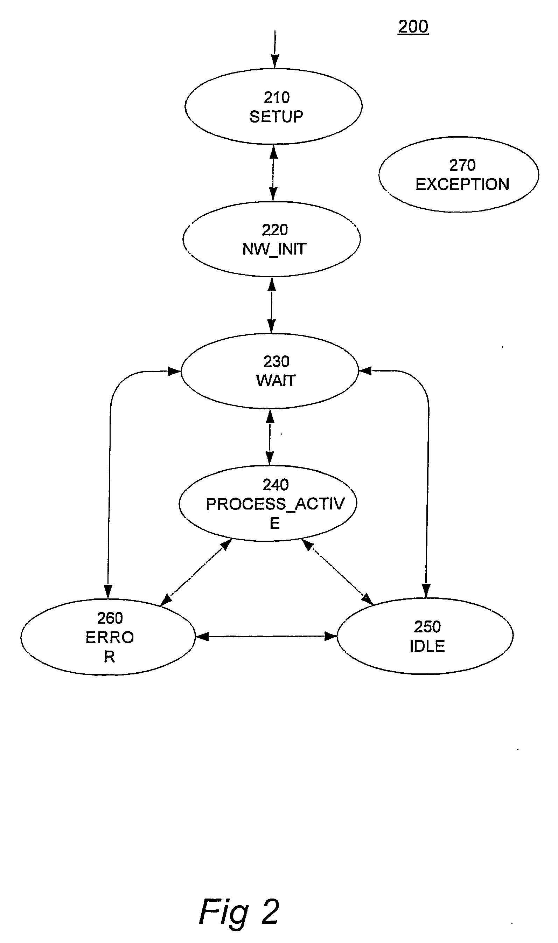

In FIG. 1 a first device 100 is connected to a network 120 via a communications module 101 as mentioned above, which adapts the data transmitted from the device 101 to the protocol used for transferring data via the network. Likewise, the communications module 101 adapts data received from the network 120 to a format which is suitable for reception by the device 100. In similarity to the first device 100, further devices, illustrated by the second device 110 in FIG. 2, may also be connected to the network 120 via their associated communications modules 111. Data are transferred between the devices 100, 110 and a control center 130.

Preferably the control center 130 acts as a master for the devices 100, 110 acting as slaves. Consequently, the control center 130 transmits control and process data to the devices 100, 110 which in turn transmits process data back to the control center 130. The control and process data varies depending on the specific function of the devices 100, 110. For example, if the device is a PLC controlling a pump as above, the control data may be a desired value of the transferred liquid volume per second or a desired value of the rotational speed of the motor driving the pump. Correspondingly, the process data may be the actual rotational speed of the motor, the temperature inside the casing of the motor, the temperature of the liquid being pumped, etc.

The communications modules 101, 111 handles all network and protocol specific functions as default (i.e. connections, data exchange, events, etc.), while the devices 100, 110 controls the data and services available to the network. The devices 100, 110 do hence not have to know which specific network 120 that is currently used as medium for transferring data back and forth between the devices 100, 110 and the control center 130. The communication between the devices 100, 110 and the communications modules 101, 111 are carried out in either serial or parallel mode via a fixed electrical interface. The communication between the devices 100, 110 and the communications modules 101, 111 may then be optimized as to specific design parameters, such as data transfer speed, the amount of data to transfer, sizes of the communications modules 101, 111 and the devices 100, 110, etc.

In the following, for sake of clarity, reference will be made only to one device 100 and its associated communications module 101. It is however appreciated as mentioned above that one or more devices 100, 110 may be connected to the network 120 simultaneously.

The operation of the communications module 101 is controlled by means of a state machine 200 as illustrated in FIG. 2, wherein the state machine 200 sets the communications module 101 in different operational states depending on the current state of the state machine 200. The state machine 200 is preferably implemented as algorithms executed by a microprocessor according to techniques known per se. Other implementations of the state machine 200, such as in an FPGA (Field Programmable Gate Array) or an ASIC (Application Specific Integrated Circuit) is however equally possible within the scope of the invention.

After startup, the state machine 200 of the communications module 101 enters a setup state 210 during which the device 100 determines information about the communications module 101 and notifies the communications module 101 which of a set of parameters the device 100 will share with the control center 130, i.e. the device 100 may internally use many parameters for control and supervision, but may only want to share some of those parameters externally.

When the setup is complete and the communications module 101 has accepted the setup, the state machine 200 enters a network initialization state 220, wherein the communications module 101 executes routines for establishing a connection to the network 120 in accordance with the specific network protocol used. During the network initialization, the communications module 101 may query the device 100 for network-specific functionality that may be provided by the device 100. Also network address, baud rate, etc may be provided by the device 100 during the network initialization. After finalizing the network initialization the communications module may provide data to the device 100 as regards supervision of network participation (i.e. is the network participation supervised by another network device?), eventual errors in the network participation, and the validity of the process data.

After the network initialization state the communications module 101 is ready to act as an interface between the device 100 and the network 120 and the state machine 200 enters a wait state 230, wherein the communications module 101 awaits data from either the network 120 or the device 100. During the wait state 230 any process data transferred from the communications unit 101 to the device 100 may be invalid.

If, however, data is received from the network 120 or from the device 100, the state machine 200 enters an active state 240, wherein data received from the device 100 is translated by the communications module 101 to conform with the actual network protocol used for communication with the control center 130. The translation normally comprises the creation of a header indicating the source and destination of the data packet. Additional data such as diagnostic data or interrupt data may also be transferred during the active state 240.

From either the wait state 220 or the active state 240 the state machine may enter an idle state 250. The definition of the idle state 250 is network specific, i.e. the mode that the communications module 101 enters when the state machine enters the idle state 250 depends on which network the communications module 101 is adapted to communicate with. For example, if the Profibus protocol is used for communication on the network, the state machine 250 may enter the idle state 250 after the communications module 101 has received a response to a sent telegram. This is due to the Profibus protocol which defines a time delay the sender of the telegram, after having received the response, must wait until it sends another telegram.

In case a serious network error occurs, the state machine 250 enters an error state 260 which indicates that no communication via the network is possible. The state machine 250 may also enter the error state 260 from either the wait state 230 or the active state 240. In the error state 230 the device 100 should preferably go to a safe state. For example, as described above, if the device 100 is a PLC which is controlling a pump used in the cooling system of a nuclear power plant, the PLC should, if the communications unit enters the error state 260, switch over to a predetermined emergency state wherein it e.g. controls the pump so that a maximum flow of cooling liquid is established.

The state machine may enter an exception state 270 which indicates that further process has been halted by the communications module 101 due to an application error. (e.g. invalid network configuration parameters, timeout, etc).

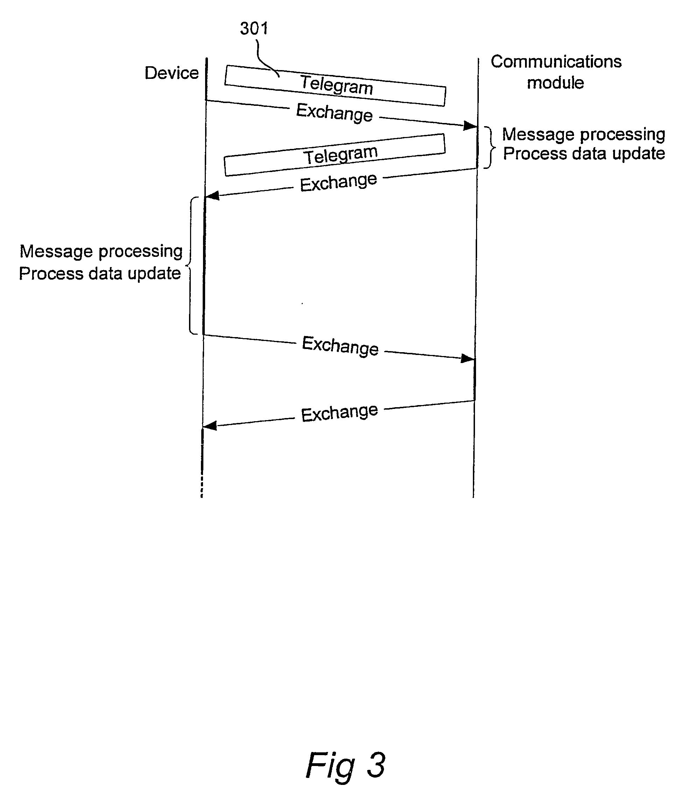

FIG. 3 illustrates the communication between the device 100 and the communications module 101. The communication interface between the device 100 and the communications module 101 is based in telegram 301 messaging. The same messaging structure is preferably used for both serial and parallel communication between the device 100 and the communications module 101. The telegrams 301 are preferably exchanged in half duplex under control by the device 100, wherein the communications module 101 will reply to any message received from the device 100. After reception of a message in the device 100 or in the communications module 101, each message is processed for determining the content thereof and extracting process data that may be part of the message. An update of the data in the device 100 or in the communications module 101 is then performed based on the extracted process data.

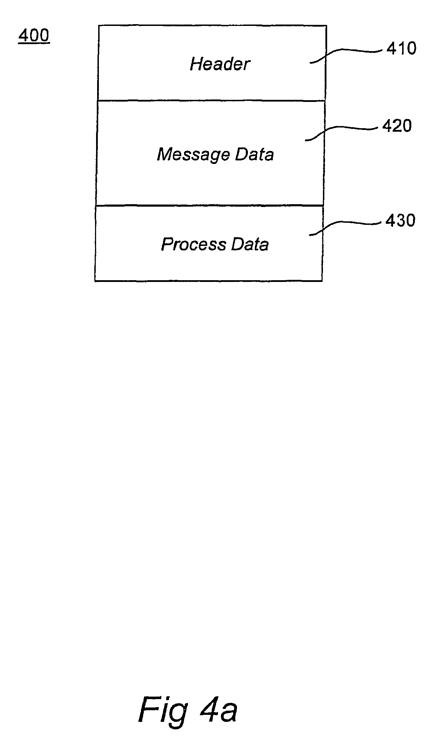

FIG. 4a illustrates a preferred structure of the telegrams that are transferred between the device 100 and the communications module 101. The telegrams 400 transmitted from the device 100 and the communications module 101 respectively are structurally similar, apart from the headers which, as will de disclosed in more detail below, differs somewhat.

The header 410 comprises information regarding commands and responses, e.g. data length, command type, object, instance, attribute as well as error indications. The header 410 also comprises communication control and status information, i.e. information used by the device 100 to control the communication with the communications module 101 and information used by the communications module 101 to control the communication with the device 100 as well as information used by the communications module 101 to indicate the status of the communication module 101 and the network 120 to the device.

The message data portion 420 comprises data associated with any command/response identified in the header 410. It is appreciated that there can be several outstanding messages simultaneously in each direction between the device 100 and the communications module 101, i.e. one or more messages may stretch over many telegrams 400. In addition to the header 410 and the message data portion 420, the telegram also comprises an optional process data portion 430.

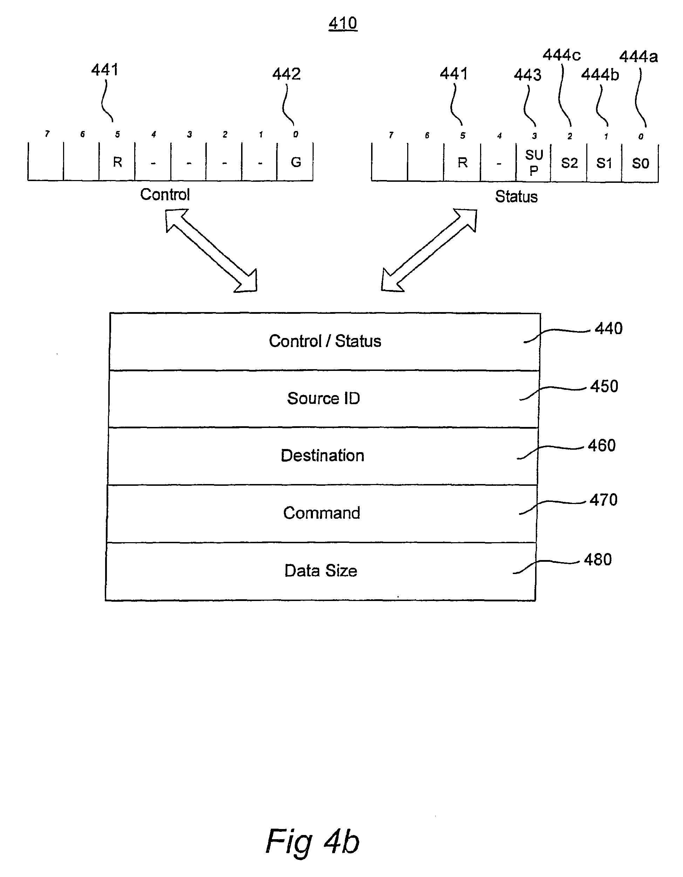

A preferred embodiment of the header 410 of the telegram 400 is illustrated in more detail in FIG. 4b. In case the telegram is transmitted from the device 100 to the communications module 101, the first portion 440 of the header 410 comprises control data. More specifically, the control data portion comprises a ready bit (R) 441 which indicates that the device 100 is ready to receive a new command. The control portion also comprises a guard bit (G) 442 which indicates that the device 100 has at least one data portion that should be transferred onto the network 120. The size of the control data portion may vary depending on the number of events to control. In most cases 8 bits will be sufficient, but any other number of bits, e.g. 16 or 32, are equally possible.

In case the telegram is sent from the communications module 101 to the device 100, the first portion 440 of the header 410 comprises status data. As with the control data portion, the status data portion also comprises a ready bit (R) 441 for indicating that the communications module 101 is ready to receive a new command.

The status data portion also comprises a supervision bit (SUP) 443 which indicates that the communications module 101 is supervised by another network device. The communications module 101 may hence during any of its states provide the device 100 with information regarding the supervision of network participation.

One important feature of the status data portion is the provision of one or more status bits Sl-Sn 444a-c which are used for indicating to the device 100 the current status of the state machine 200 in the communications module 101. In the embodiment disclosed herein, the state machine 200 may enter seven different states 210-270 and by providing three status bits 444a-c in the status data portion it is possible to indicate to the device 100 which of the seven states the communications module 101 is currently operating in. Consequently, when the device 100 receives a telegram 400 from the communications module 101, the device will first process the data in the telegram in order to extract commands and other data. By analyzing the status bits 444a-c in the status data portion, the device is able to determine if the extracted commands and data are reasonable, i.e. the device 100 may check whether the state machine 200 is in a state which will produce valid data.

The device 100 may store a list of states in which the state machine 200 provides non-valid data. Alternatively, the device 100 may store a database comprising the different operational states 210-270 of the communications module 101 and ranges in which the operational data, i.e. the message 420 and any process data 430, may reside. If the operational data assume a value outside the range defined for a specific state, the device may discard the data as non-valid. For example, referring back to the cooling pump in the nuclear power plant, it is by the provision of the status bits 444a-c possible for the PLC to switch over to automatic mode if the communications module 101 enters a non-valid data state (e.g. error state 280 or exception state 270), wherein the PLC e.g. either may maintain the current speed of the pump or may enter an emergency state with the pump operating at top speed.

While the present invention has been particularly shown and described with reference to specific embodiments thereof, it will be understood by those skilled in the art that various changes in form and detail may be made thereto, and that other embodiments of the present invention beyond embodiments specifically described herein may be made or practiced without departing from the present invention as limited solely by the appended claims.

## Claims

1. A method for transferring operational data (420, 430) from a communications module (101), said operational data (420, 430) being received in the communications module (101) from a first electric device (130) connected to the communications module, during one or more predefined operational states (210-270) in the communications module, which states are controlled by a state machine (200) in the communications module, to a second electric device (100) connected to the communications module, said method comprising:
determining which operational state (210-270) the state machine (200) is currently operating in,
adding information (410) to the operational data (420, 430), said information indicating the current operational state of the state machine, and
transferring a telegram (301), comprising the added information and the operational data, to the second electric device.

2. A method according to claim 1, wherein the information is part of a header (410) that is added to the operational data (420, 430).

3. A method according to claim 2, wherein the operational data (420, 430) comprise process data for controlling the electric device (100).

4. A method for interpreting operational data (420, 430) received in a second electric device (100) from a communications module (101) during a first set of predetermined operational states (210-270) in the communications module which states are controlled by a state machine (200) in the communications module, said method comprising:
receiving a telegram (301) from the communications module (101),
extracting, from the telegram, operational data (420, 430) and information relating to the current operational state (210-270) of the state machine (200), said operational data (420, 430) being received in the communications module (101) from a first electric device (130) connected to the communications module,
determining, from the extracted information relating to the current operational state (210-270) of the state machine (200), which of the predetermined operational states from the first set of states (210-270) the state machine (200) is currently operating in, and
discarding the received operational data as invalid if the determined operational state of the state machine (200) is part of a second set of states comprising one or more predetermined operational states.

5. A method according to claim 4, wherein the information relating to the current operational state (210-270) of the state machine (200) is part of a header (410) that is added to the operational data (420, 430).

6. A method according to claim 5, wherein the operational data (420, 430) comprise process data for controlling the electric device (100).

7. A communications module (101) being adapted to receive operational data from a first electric device connected to the communications module and to transfer the operational data (420, 430) from the communications module, during one or more predefined operational states (210-270) in the communications module, which states are controlled by a state machine (200) in the communications module, to a second electric device (100) connected to the communications module, wherein the communications module is adapted to:
determine which operational state (210-270) the state machine (200) is currently operating in,
add information (410) to the operational data (420, 430), said information indicating the current operational state of the state machine, and
transfer a telegram (301), comprising the added information and the operational data, to the second electric device.

8. A communications module according to claim 7, wherein the communications module is adapted to add information that is part of a header (410) to the operational data (420, 430).

9. A communications module according to claim 8, wherein the communications module is adapted to transfer operational data (420, 430) that comprise process data for controlling the electric device (100).

## Patentansprüche

1. Verfahren zum Übertragen von Betriebsdaten (420, 430) von einem Kommunikationsmodul (101), wobei diese Betriebsdaten (420, 430) in dem Kommunikationsmodul (101) von einer ersten elektrischen Vorrichtung (130), die mit dem Kommunikationsmodul verbunden ist, während eines oder mehrerer zuvor festgelegter Betriebszustände (210-270) in dem Kommunikationsmodul empfangen werden, wobei diese Zustände durch eine Zustandsmaschine (200) in dem Kommunikationsmodul gesteuert werden, zu einer zweiten elektrischen Vorrichtung (100), die mit dem Kommunikationsmodul verbunden ist, wobei das Verfahren Folgendes umfasst:
Bestimmen, in welchem Betriebszustand (210-270) die Zustandsmaschine (200) momentan arbeitet,
Hinzufügen von Informationen (410) zu den Betriebsdaten (420, 430), wobei diese Informationen den momentanen Betriebszustand der Zustandsmaschine anzeigen, und
Übertragen eines Telegramms (301), das die hinzugefügten Informationen und die Betriebsdaten umfasst, zu der zweiten elektrischen Vorrichtung.

2. Verfahren nach Anspruch 1, wobei die Informationen Teil eines Kopffeldes (410) sind, das den Betriebsdaten (420, 430) hinzugefügt wurde.

3. Verfahren nach Anspruch 2, wobei die Betriebsdaten (420, 430) Prozessdaten zum Steuern der elektrischen Vorrichtung (100) umfassen.

4. Verfahren zum Interpretieren von Betriebsdaten (420, 430), die in einer zweiten elektrischen Vorrichtung (100) von einem Kommunikationsmodul (101) während eines ersten Satzes zuvor festgelegter Betriebszustände (210-270) in dem Kommunikationsmodul empfangen werden, wobei diese Zustände durch eine Zustandsmaschine (200) in dem Kommunikationsmodul gesteuert werden, wobei das Verfahren Folgendes umfasst:
Empfangen eines Telegramms (301) von dem Kommunikationsmodul (101),
Extrahieren, aus dem Telegramm, von Betriebsdaten (420, 430) und Informationen bezüglich des momentanen Betriebszustandes (210-270) der Zustandsmaschine (200), wobei die Betriebsdaten (420, 430) in dem Kommunikationsmodul (101) von einer ersten elektrischen Vorrichtung (130), die mit dem Kommunikationsmodul verbunden ist, empfangen werden,
Bestimmen, anhand der extrahierten Informationen bezüglich des momentanen Betriebszustandes (210-270) der Zustandsmaschine (200), in welchem der zuvor festgelegten Betriebszustände aus dem ersten Satz von Zuständen (210-270) die Zustandsmaschine (200) momentan arbeitet, und
Verwerfen der empfangenen Betriebsdaten als ungültig, wenn der bestimmte Betriebszustand der Zustandsmaschine (200) Teil eines zweiten Satzes Zustände ist, der einen oder mehrere zuvor festgelegte Betriebszustände umfasst.

5. Verfahren nach Anspruch 4, wobei die Informationen bezüglich des momentanen Betriebszustandes (210-270) der Zustandsmaschine (200) Teil eines Kopffeldes (410) sind, der den Betriebsdaten (420, 430) hinzugefügt wird.

6. Verfahren nach Anspruch 5, wobei die Betriebsdaten (420, 430) Prozessdaten zum Steuern der elektrischen Vorrichtung (100) umfassen.

7. Kommunikationsmodul (101), das dafür geeignet ist, Betriebsdaten von einer ersten elektrischen Vorrichtung, die mit dem Kommunikationsmodul verbunden ist, zu empfangen und die Betriebsdaten (420, 430) von dem Kommunikationsmodul während eines oder mehrerer zuvor festgelegter Betriebszustände (210-270) in dem Kommunikationsmodul, wobei diese Zustände durch eine Zustandsmaschine (200) in dem Kommunikationsmodul gesteuert werden, zu einer zweiten elektrischen Vorrichtung (100), die mit dem Kommunikationsmodul verbunden ist, zu übertragen, wobei das Kommunikationsmodul dafür geeignet ist:
zu bestimmen, in welchem Betriebszustand (210-270) die Zustandsmaschine (200) momentan arbeitet,
Informationen (410) zu den Betriebsdaten (420, 430) hinzuzufügen, wobei diese Informationen den momentanen Betriebszustand der Zustandsmaschine anzeigen, und
ein Telegramm (301), das die hinzugefügten Informationen und die Betriebsdaten umfasst, zu der zweiten elektrischen Vorrichtung zu übertragen.

8. Kommunikationsmodul nach Anspruch 7, wobei das Kommunikationsmodul dafür geeignet ist, Informationen, die Teil eines Kopffeldes (410) sind, zu den Betriebsdaten (420, 430) hinzuzufügen.

9. Kommunikationsmodul nach Anspruch 8, wobei das Kommunikationsmodul dafür geeignet ist, Betriebsdaten (420, 430) zu übertragen, die Prozessdaten zum Steuern der elektrischen Vorrichtung (100) umfassen.

## Revendications

1. Procédé pour transférer des données opérationnelles (420, 430) depuis un module de communications (101), lesdites données opérationnelles (420, 430) étant reçues dans le module de communications (101) en provenance d'un premier dispositif électrique (130) connecté au module de communications, pendant un ou plusieurs états opérationnels (210-270) prédéfinis dans le module de communications, lesquels états sont commandés par une machine à états (200) dans le module de communications, vers un second dispositif électrique (100) connecté au module de communications, ledit procédé comprenant les étapes consistant à:
déterminer dans quel état opérationnel (210-270) fonctionne actuellement la machine à états (200),
ajouter une information (410) aux données opérationnelles (420, 430), ladite information indiquant l'état opérationnel actuel de la machine à états, et
transférer un télégramme (301), comprenant l'information ajoutée et les données opérationnelles, au second dispositif électrique.

2. Procédé selon la revendication 1, dans lequel l'information fait partie d'un en-tête (410) qui est ajouté aux données opérationnelles (420, 430).

3. Procédé selon la revendication 2, dans lequel les données opérationnelles (420, 430) comprennent des données de traitement pour commander le dispositif électrique (100).

4. Procédé pour interpréter des données opérationnelles (420, 430) reçues dans un second dispositif électrique (100) en provenance d'un module de communications (101) pendant un premier jeu d'états opérationnels (210-270) prédéterminés dans le module de communications, lesquels états sont commandés par une machine à états (200) dans le module de communications, ledit procédé comprenant les étapes consistant à :
recevoir un télégramme (301) provenant du module de communications (101),
extraire du télégramme des données opérationnelles (420, 430) et une information relative à l'état opérationnel actuel (210-270) de la machine à états (200), lesdites données opérationnelles (420, 430) étant reçues dans le module de communication (101) en provenance d'un premier dispositif électrique (130) connecté au module de communications,
déterminer, à partir de l'information extraite relative à l'état opérationnel actuel (210-270) de la machine à états (200), dans lequel des états opérationnels prédéterminés du premier jeu d'états (210-270) la machine à états (200) fonctionne actuellement, et
rejeter les données opérationnelles reçues comme invalides si l'état opérationnel déterminé de la machine à états (200) fait partie d'un second jeu d'états comprenant un ou plusieurs états opérationnels prédéterminés.

5. Procédé selon la revendication 4, dans lequel l'information relative à l'état opérationnel actuel (210-270) de la machine à états (200) fait partie d'un en-tête (410) qui est ajouté aux données opérationnelles (420, 430).

6. Procédé selon la revendication 5, dans lequel les données opérationnelles (420, 430) comprennent des données de traitement pour commander le dispositif électrique (100).

7. Module de communications (101) étant adapté afin de recevoir des données opérationnelles provenant d'un premier dispositif électrique connecté au module de communications et de transférer les données opérationnelles (420, 430) provenant du module de communications, pendant un ou plusieurs états opérationnels prédéfinis (210-270) dans le module de communications, lesquels états sont commandés par une machine à états (200) dans le module de communications vers un second dispositif électrique (100) connecté au module de communications, dans lequel le module de communications est adapté afin de :
déterminer dans quel état opérationnel (210-270) la machine à états (200) fonctionne actuellement,
ajouter une information (410) aux données opérationnelles (420, 430), ladite information indiquant l'état opérationnel actuel de la machine à états, et
transférer un télégramme (301), comprenant l'information ajoutée et les données opérationnelles, au second dispositif électrique.

8. Module de communications selon la revendication 7, dans lequel le module de communications est adapté afin d'ajouter une information qui fait partie d'un en-tête (410) aux données opérationnelles (420, 430).

9. Module de communications selon la revendication 8, dans lequel le module de communications est adapté afin de transférer des données opérationnelles (420, 430) qui comprennent des données de traitement pour commander le dispositif électrique (100).
